# FASCICULE DE BREVET EUROPEEN

(11) **EP 2 339 253 B1**
(45) Date de publication et mention de la délivrance du brevet: **08.02.2012**
(21) Numéro de dépôt: 10196899.8
(22) Date de dépôt: 23.12.2010
(51) Int. Cl.: F24F 5/00, F24F 12/00

(54) **Maison d'habitation avec système de climatisation passive**
Wohngebäude mit einem passiven Klimatisierungssystem
Dwelling with passive air-conditioning system

(30) Priorité: 23.12.2009 FR 0906338
(43) Date de publication de la demande: 29.06.2011
(73) Titulaire: Garoni, M. Régis, 31270 Villeneuve Tolosane (FR)
(72) Inventeur: Garoni, M. Régis, 31270 Villeneuve Tolosane (FR)
(74) Mandataire: Ravina, Bernard

(56) Documents cités:
- DE-A1- 10 058 273
- DE-A1- 19 508 252
- DE-U1- 20 216 395
- DE-U1- 29 812 747
- FR-A1- 2 902 179
- US-B1- 6 293 120

## Description

### Domaine technique

La présente invention est du domaine des techniques et matériels utilisés pour climatiser un espace clos prévu pour être occupé de manière permanente ou temporaire et est relative à un système de climatisation passive pour maisons d'habitation comprenant un vide sanitaire ou une cave.

Par climatisation il faut entendre les opérations visant à maintenir le milieu ambiant d'un habitat à une température de confort soit par réchauffement de l'air contenu dans cet habitat soit par refroidissement.

### Etat de la technique antérieure.

On sait la climatisation soit par chauffage, soit par refroidissement représente une part particulièrement importante de la consommation énergétique liée à l'occupation d'une maison d'habitation. Ainsi, pour réduire cette consommation, des solutions ont été proposées visant pour l'essentiel à réduire les pertes énergétiques en renforçant l'isolation des parois en contact avec l'extérieur. Typiquement, à cette fin, sont utilisés des matériaux alvéolaires en doublage des parois lesquelles, additionnellement, peuvent être constituées par des matériaux intrinsèquement isolants.

On a cherché aussi dans un but d'économie d'énergie à utiliser l'énergie géothermique. Ainsi on connaît l'utilisation d'échangeurs thermiques sous forme de puits canadiens, installés dans le sol à profondeur adéquate. Typiquement ces échangeurs de chaleur ont pour but essentiel de préchauffer l'air avant reprise par un appareil de chauffage domestique.

On connaît du DE 298 12 747 une maison d'habitation comportant un système de climatisation passive et un vide sanitaire. Selon ce document l'air pénètre dans le vide sanitaire et ensuite dans la maison et plus particulièrement dans l'échangeur d'une ventilation mécanique forcée, double flux, équipant cette maison.

### Exposé de l'invention

La présente invention a pour objet principal d'apporter des améliorations aux systèmes de l'art antérieur.

A cet effet la maison d'habitation du type comportant un système de climatisation passive, un vide sanitaire et un local technique interne ou externe au volume d'habitation pouvant constituer cellier 1, ou placard ou autre, se caractérise essentiellement en ce que le système de climatisation comporte :
- au moins une première conduite d'admission d'air, enterrée, formant échangeur de chaleur, ladite conduite étant en relation de communication d'une part avec le vide sanitaire et d'autre part avec l'extérieur pour alimenter le vide sanitaire en air extérieur,
- au moins un échangeur de chaleur air/air installé dans le local technique, le dit échangeur comportant deux voies de passage d'air séparées de manière étanche l'une de l'autre par une paroi d'échange de chaleur, la première voie par son orifice d'entrée et son orifice de sortie étant en relation de communication avec le volume interne du vide sanitaire et comportant un ventilateur pour forcer une circulation d'air le long de la paroi d'échange, et la seconde voie, par son orifice d'entrée étant relation de communication avec l'extérieur par l'intermédiaire d'une seconde conduite d'admission et par son orifice de sortie avec une ventilation mécanique contrôlée du type double flux, installée dans le local technique, ladite seconde voie comportant un ventilateur pour aspirer l'air extérieur et le refouler vers la ventilation mécanique contrôlée en forçant sa circulation le long de la paroi d'échange,
- une ventilation mécanique contrôlée double flux intégrant un échangeur thermique, ou une pompe à chaleur, comportant deux voies de passage d'air associées à l'échangeur thermique ou à la pompe à chaleur, la première voie de la ventilation mécanique contrôlée étant en relation de communication par son orifice d'entrée avec la sortie de la seconde voie de l'échangeur de chaleur, et par son orifice de sortie, par l'intermédiaire de gaines de distribution, avec des bouches de distribution d'air dans les pièces de l'habitation, et la seconde voie de la ventilation mécanique contrôlée étant en relation de communication par son orifice d'entrée, par l'intermédiaire de gaine de reprise avec des grilles de reprise d'air installées dans les pièces de l'habitation et par son orifice de sortie en relation de communication avec une conduite d'évacuation, elle-même en relation de communication avec un premier bipasse apte à diriger l'air de reprise soit vers le vide sanitaire soit vers l'extérieur.

Une telle disposition permet d'utiliser l'énergie géothermique selon la saison, pour participer au chauffage de la maison par apport de calories ou pour participer à sa réfrigération par dissipation des calories vers l'extérieur.

La première conduite d'admission, selon une autre caractéristique de l'invention, est enterrée à une profondeur de l'ordre de 60 cm à 1,20 m et longe au moins un des côtés de la maison et présente une longueur et un diamètre suffisants pour offrir une surface d'échange conséquente favorisant, selon la saison, le réchauffement de l'air en entrée du vide sanitaire ou son refroidissement par rapport à la température extérieure de l'air, sachant que le vide sanitaire, isolé en périphérie par les remblais de terre est à température sensiblement constante. De par cette disposition, l'air en entrée du vide sanitaire est à une température proche de celle de la terre à la profondeur de la conduite, la valeur de cette température, pour les régions tempérées étant typiquement de l'ordre de 13°C à 15°C.

La disposition d'échangeur de chaleur permet de séparer le flux d'air puisé dans le vide sanitaire, du flux d'air entrant dans l'habitation. Ainsi cet air ne pourra pas être contaminé par des agents pathogènes et autres, présents dans l'atmosphère du vide sanitaire.

Selon une autre caractéristique de l'invention, le système de climatisation comporte une unité de contrôle et de commande par laquelle une température de consigne peut être assignée, et le vide sanitaire comporte une sonde de température connectée à l'unité de contrôle et de commande.

Selon une autre caractéristique de l'invention, le premier bipasse comporte un volet motorisé et intègre une sonde de température connectée électriquement à l'unité de contrôle et de commande, le moteur d'actionnement du bipasse est commandé par l'unité de contrôle et de commande et en fonction de la température mesurée par la sonde du bipasse, de la température de consigne, de la température du vide sanitaire et de la température externe, le premier bipasse, sous la commande de l'unité de contrôle commute cette conduite d'évacuation soit vers l'extérieur de la maison soit vers le vide sanitaire.

La disposition du premier bipasse permet lorsque la température externe à l'habitation est basse de réalimenter en calories l'atmosphère du vide sanitaire en dirigeant l'air de reprise vers le volume interne de ce dernier. Ainsi ces calories pourront alors être restituées à l'air entrant dans le volume de la maison, par échange thermique au travers de l'échangeur de chaleur. En revanche lorsque la température externe à l'habitation est plus élevée que celle désirée, le rejet vers l'extérieur évitera tout réchauffement du vide sanitaire, ce dernier pourra alors conserver une température modérée de 13°C à 15°C de façon à refroidir l'air entrant dans l'habitation.

Pour renforcer encore cet effet, l'invention, selon une autre de ses caractéristiques est pourvue d'un second bipasse à volet motorisé disposé immédiatement en aval de l'orifice de sortie de la première voie de l'échangeur de chaleur, ledit bipasse comportant une sonde thermique connectée électriquement à l'unité de contrôle et de commande, le moteur du volet de ce second bipasse étant connecté à ladite unité de contrôle et de commande et qu'en fonction de la température relevée par la sonde de ce second bipasse, de la température de consigne, de la température du vide sanitaire et de la température externe, ledit second bipasse, sous la commande de l'unité centrale, commute la sortie de la première voie de l'échangeur de chaleur soit vers le vide sanitaire soit vers la conduite d'évacuation.

Selon une autre disposition de l'invention, afin d'éviter tout retour d'air depuis la conduite d'évacuation vers le second bipasse, un clapet antiretour est installé immédiatement en aval de ce dernier.

Selon une autre caractéristique de l'invention, sont prévues deux conduites d'admission d'air dans le vide sanitaire, disposées de manière opposée l'une par rapport à l'autre longeant chacune au moins deux côtés adjacents de la maison, les dites conduites pénétrant dans le vide sanitaire par deux points opposés afin d'obtenir un effet de brassage de l'air contenu dans le volume du vide sanitaire.

Selon une autre caractéristique de l'invention, les orifices d'entrée et de sortie de la première voie de passage de l'échangeur de chaleur débouchent tous deux dans une chambre semi étanche à l'air, formée dans le vide sanitaire et s'étendant selon toute la hauteur de ce dernier.

### Avantages de l'invention.

Un intérêt de l'invention réside dans sa capacité à utiliser l'inertie thermique du vide sanitaire tout en assurant une étanchéité à l'air entre ce dernier et le volume interne de la maison d'habitation et ce grâce à l'utilisation d'un échangeur de chaleur air-air et d'une ventilation mécanique contrôlée. Cet échangeur de chaleur présente en outre l'intérêt d'assurer une séparation physique entre le flux d'air entrant dans la maison et le flux d'air entrant dans le vide sanitaire, on évite ainsi toute contamination du flux d'air entrant dans la maison par des agents bactériens et autres présents dans le vide sanitaire.

### Description sommaire des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :
- la figure 1 est une vue en coupe verticale d'une maison d'habitation conforme à l'invention,
- la figure 2 est une vue en coupe de dessus d'une maison d'habitation conforme à l'invention,
- la figure 3 est vue agrandie du système de climatisation passive,
- la figure 4 est une vue en coupe verticale d'une maison selon une variante d'exécution,
- la figure 5 est une vue de détail de la maison selon la variante d'exécution.

### Meilleure manière de réaliser l'invention

Telle que représentée aux figures jointes, la maison d'habitation comprend un local technique 1, doté d'une ouverture d'accès associée à une porte, pouvant constituer cellier ou placard ou autre, isolé phoniquement et thermiquement, installé au centre de la maison, ce local technique s'étendant de manière verticale du sol au plafond de l'habitation. Cette maison comprend de plus un vide sanitaire 2 enterré et une dalle de plancher 3 assurant une séparation étanche entre le volume interne de la maison et le volume interne du vide sanitaire. Dans le vide sanitaire sera disposée une sonde de température accessible depuis le local technique. Au-dessus du plafond, la maison comprend des combles isolés 4. Enfin la maison comprend un système de climatisation passive décrit ci-après.

Ce système comprend notamment une unité de contrôle et de commande 100 par laquelle les occupants de la maison d'habitation peuvent indiquer une température de consigne, la sonde de température installée dans le vide sanitaire étant connectée à cette unité de contrôle et de commande. Le système comprend de plus une ventilation mécanique contrôlée 5, du type double flux, intégrant un échangeur thermique ou une pompe à chaleur, cette ventilation comportant une première voie 50 dont l'orifice d'entrée reçoit de l'air à climatiser c'est-à-dire à porter à une température de consigne déterminée par les occupants de la maison. Par un orifice de sortie, cette première voie 50 est en relation de communication avec des gaines 500 de distribution d'air tempéré, logées dans les combles 4, elles-mêmes en communication avec des grilles de distribution d'air 501 installées dans les diverses pièces à climatiser telles que chambres, séjours etc. Les grilles 501 seront dimensionnées en sorte d'obtenir en sortie une vitesse faible d'écoulement d'air et réduire ainsi le niveau sonore.

Les gaines 500 pourront recevoir des résistances thermiques 13 alimentées en courant électrique. De préférence, ces résistances thermiques 13 seront disposées dans des caissons traversés par les gaines 500. Ces résistances thermiques 13 seront commandées et contrôlées par l'unité de contrôle et de commande 100, elles seront activées lorsque des calories devront être apportées à l'air pour atteindre la température de consigne.

La ventilation mécanique contrôlée 5 comporte de plus une seconde voie 51 dont l'orifice d'entrée est connecté par une ou plusieurs gaines de reprise 510 à des grilles de reprise d'air 511 installées dans une ou plusieurs pièces de l'habitation. Comme on peut le voir, les gaines de reprise 510 sont logées dans les combles 4. Les grilles 511 et/ou les gaines 510 seront équipées de filtres aptes à retenir les poussières et les graisses.

Chaque voie 50 et 51 de la ventilation mécanique contrôlée est dotée d'un ventilateur pour pulser l'air.

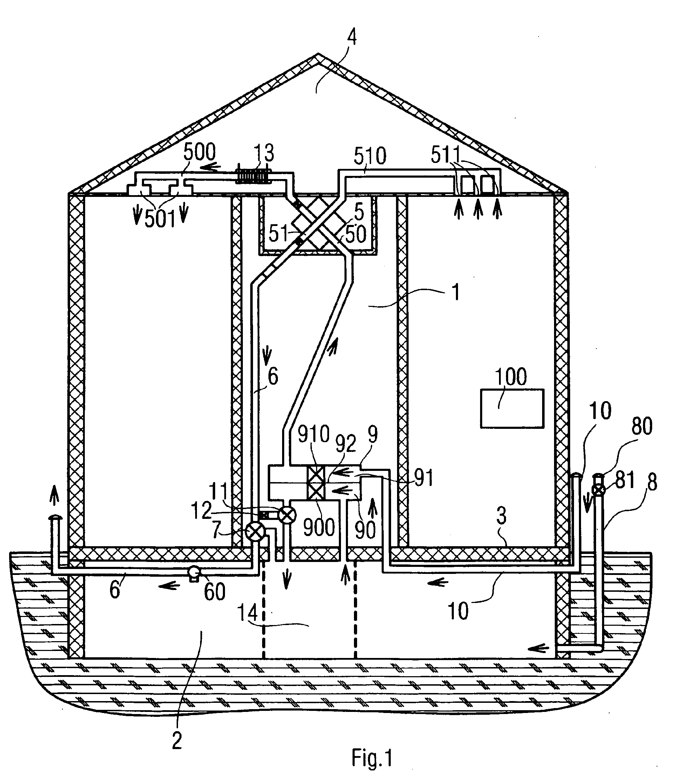

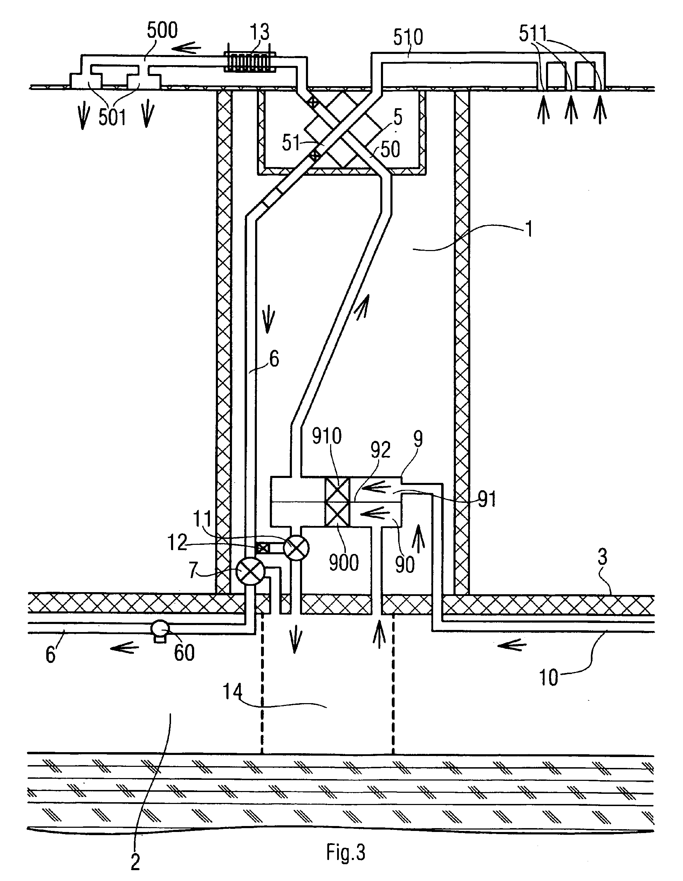

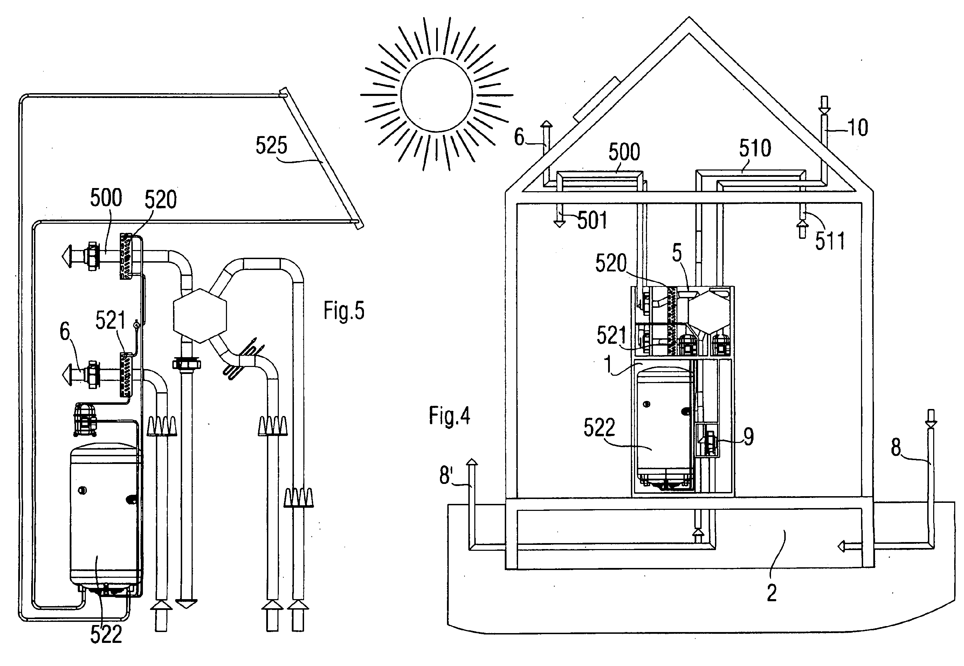

La seconde voie 51 est connectée à une conduite 6 d'évacuation de l'air de reprise vers l'extérieur du volume d'habitation. Plus particulièrement, cette conduite d'évacuation 6 est connectée à un premier bipasse 7 à volet motorisé intégrant une sonde de température connectée électriquement à l'unité de contrôle et de commande. Ce bipasse est installé dans le local technique 1. Le moteur d'actionnement du bipasse sera commandé par l'unité de contrôle et de commande 100. Ainsi, en fonction de la température mesurée, de la température de consigne, de la température du vide sanitaire et de la température externe, ce premier bipasse 7, sous la commande de l'unité de contrôle 100 sera apte à commuter cette conduite d'évacuation soit vers l'extérieur de la maison soit vers le vide sanitaire 2. Ainsi, en saison froide l'air véhiculé par la conduite 6 pourra être dirigé vers le vide sanitaire pour réchauffer ce dernier. Avantageusement, cette conduite, dans le vide sanitaire, pourra comporter un clapet de surpression 60 taré, apte à assurer une communication entre la conduite et le vide sanitaire en cas de surpression de ce dernier. Dans la forme de réalisation objet des figures 1 à 3, la conduite d'évacuation 6 chemine en partie dans le vide sanitaire et présente une section externe à l'habitation dotée d'une bouche d'évacuation installée à distance et au-dessus du sol. En variante, comme on peut le voir notamment en figure 4, la conduite d'évacuation chemine en partie dans les combles et présente extérieurement à l'habitation au-dessus de la toiture une bouche d'évacuation d'air.

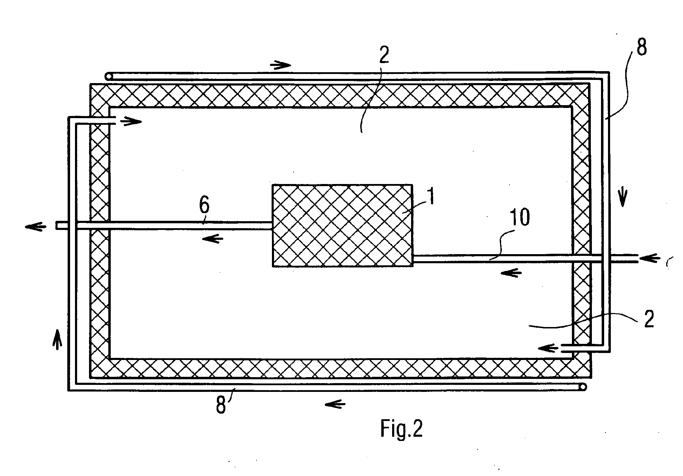

Le système de climatisation comprend de plus au moins une première conduite 8 d'admission d'air dans le vide sanitaire, cette conduite 8 étant en relation de communication avec l'extérieur. Cette conduite est enterrée sous une profondeur de terre comprise entre 60 cm et 1,20 m et forme un échangeur de chaleur. Comme on peut le voir plus particulièrement en figure 2, cette conduite longe deux côtés adjacents de la maison d'habitation et comporte selon une de ses extrémités à savoir son extrémité d'admission, une prise d'air 80 installée au dessus et à distance du sol à l'extérieur de l'habitation. Par son autre extrémité ou extrémité de délivrance, cette conduite pénètre dans le vide sanitaire. A cette extrémité, la conduite comportera avantageusement une grille. On peut voir sur cette figure que le système de climatisation passive comporte deux conduites d'admission 8 disposées de manière opposée l'une par rapport à l'autre et que les extrémités de délivrance sont opposées l'une à l'autre de façon à créer dans le vide sanitaire 1, un effet de brassage de l'air et d'homogénéisation de ce dernier.

Avantageusement, à chaque prise d'air 80 sera associée une vanne 81 à commande manuelle ou à commande motorisée, apte à autoriser ou interdire toute introduction d'air dans le vide sanitaire. Ainsi en période froide, ces vannes seront fermées afin d'interdire l'introduction d'air dans le vide sanitaire 2. De cette façon, la température du volume d'air présent dans le vide sanitaire pourra augmenter progressivement et la chaleur accumulée pourra être cédée par l'échangeur 9 au flux d'air entrant.

Le système de climatisation passive comporte en outre dans le local technique 1 au moins un échangeur de chaleur air-air, pourvu de deux voies de passage d'air 90, 91 séparées de manière étanche l'une de l'autre par une paroi 92 d'échange de chaleur. La première voie 90, par son orifice d'entrée et son orifice de sortie, est en relation de communication avec le volume interne du vide sanitaire et comporte un ventilateur 900 pour forcer une circulation d'air entre l'orifice d'entrée et l'orifice de sortie et ce le long de la paroi d'échange 92.

La seconde voie 91, par son orifice d'entrée, est en relation de communication avec l'extérieur par l'intermédiaire d'une seconde conduite 10 d'admission d'air et par son orifice de sortie avec l'orifice d'entrée de la voie 50 de la ventilation mécanique contrôlée 5. Cette seconde conduite 10 présente une prise d'air externe installée au-dessus et à distance du sol pour capter, dans la mesure du possible, un air non vicié, exempt de poussières. Dans la forme de réalisation objet des figures 1 à 3, la conduite 10 pénètre dans le vide sanitaire, mais en variante, cette dernière sera logée en partie dans les combles comme on peut le voir en figure 4. La prise d'air externe que présente cette conduite sera alors disposée au-dessus de la toiture.

De préférence, la seconde voie 91 comporte un ventilateur 910 pour aspirer l'air extérieur et le refouler vers la ventilation mécanique contrôlée 5 en forçant sa circulation le long de la paroi d'échange 92. De cette manière, un échange thermique est établi entre l'air puisé dans le vide sanitaire 2 et l'air en entrant dans l'habitation. Cet air entrant, selon la saison, peut donc être préchauffé par l'échangeur de chaleur 9 ou bien refroidi avant son entrée dans la ventilation mécanique contrôlée 5. La consommation énergétique facturable, s'en trouve ainsi diminuée.

Pour éviter l'encrassement de la première voie 90 de l'échangeur de chaleur 9, des filtres ou des grilles fines pourront être installés au niveau des orifices d'entrée et de sortie.

De préférence, un second bipasse à volet motorisé 11 est disposé, dans le local technique 1, immédiatement en aval de l'orifice de sortie de la première voie 90 de l'échangeur de chaleur. Ce second bipasse 11 comporte une sonde thermique connectée électriquement à l'unité de contrôle et de commande 100. Le moteur du volet sera commandé par l'unité de commande et de contrôle 100. Ainsi en fonction de la température relevée par la sonde de ce second bipasse, de la température de consigne, de la température du vide sanitaire et de la température externe, ledit second bipasse, sous la commande de l'unité centrale 100, sera apte à commuter la sortie de la première voie soit vers le vide sanitaire 2 soit vers la conduite d'évacuation 6.

Avantageusement, un clapet antiretour 12 est installé immédiatement en aval du second bipasse 11 pour interdire tout retour d'air depuis la conduite d'évacuation 6 vers ce dernier.

Avantageusement, les orifices d'entrée et de sortie de la voie de passage 90 débouchent tous deux dans une chambre semi étanche à l'air 14 formée dans le vide sanitaire et s'étendant selon toute la hauteur de ce dernier. La ou les parois de cette chambre 14 seront dotées de perçages traversants d'admission d'air. Cette disposition a pour effet de créer un volume semi étanche permettant une montée plus rapide en température.

Enfin seront prévus des éléments de filtration installés d'une part immédiatement en amont de la première voie 50 de la ventilation mécanique contrôlée et immédiatement en aval de la seconde voie 91 de l'échangeur de chaleur 9. Un filtre sera également installé dans la conduite 6 en aval de la voie 51.

De plus les conduites 10 et 6, dans le vide sanitaire, ou dans les combles selon le cas, seront thermiquement isolées par tous moyens appropriés afin d'éviter les condensats.

En outre, en vide sanitaire, ces conduites seront posées avec une pente pour récupérer les condensats à l'extérieur des murs de façade.

Avec une ventilation mécanique contrôlée 5 comportant une pompe à chaleur, il est avantageux d'utiliser la chaleur dégagée par le condenseur 520 de cette pompe à chaleur pour assurer le chauffage de l'eau sanitaire. Ainsi ce condenseur est en relation thermique avec un ballon 522 de stockage d'eau chaude sanitaire afin que soit établi un échange thermique entre ce condenseur 520 et l'eau contenue dans le ballon 522. Avantageusement ce ballon d'eau chaude est installé dans le local technique. L'avantage d'une telle disposition réside, en période chaude, de l'apport d'une quantité de chaleur supplémentaire au ballon d'eau chaude et ce sans coût supplémentaire. De plus ce condenseur sera en relation d'échange thermique avec le flux d'air véhiculé par les gaines 500. Il sera disposé en sortie de la première voie 50 de la ventilation mécanique contrôlée.

L'évaporateur 521 de la pompe à chaleur associée à la ventilation mécanique forcée, sera en relation thermique avec la conduite 6 d'évacuation d'air afin que soit établi un échange thermique entre l'air véhiculé dans cette conduite et l'évaporateur. Cet évaporateur 521 sera installé en amont des premier et second bipasse 7 et 11.
De telles dispositions permettent d'accroitre le rendement du système de climatisation équipant la maison.
Il y a lieu de noter que ce système peut être implanté sur des maisons déjà construites.

En outre le système de climatisation, comme on peut le voir en figure 5, peut être équipé d'un capteur solaire 525 en relation d'échange thermique avec le ballon d'eau chaude.

Le local technique 1 peut être interne à la maison mais dans le cas d'opérations de rénovation de maisons, le local technique pourra être externe.

Dans la forme de réalisation objet des figures 1 à 3 l'évacuation de l'air entrant dans le vide sanitaire est assurée par la conduite 6 via le clapet de suppression 60. Dans la forme de réalisation objet des figures 4 et 5 est prévue une conduite d'évacuation 8' en relation de communication avec l'extérieur et le vide sanitaire. La surpression d'air éventuellement présente dans le vide sanitaire sera évacuée par cette conduite 8'. Cette conduite pourra comporter un clapet de surpression.

Il va de soi que la présente invention peut recevoir tous aménagements et variantes du domaine des équivalents techniques sans pour autant sortir du cadre du présent brevet, tel que définit par les revendication 1 à 15.

## Revendications

1. Maison d'habitation comportant un système de climatisation passive, un vide sanitaire (2) et un local technique (1) interne ou externe au volume d'habitation du genre cellier (1), ou placard ou autre, **caractérisée en ce que** le système de climatisation comporte :
- au moins une première conduite d'admission d'air (8), enterrée, formant échangeur de chaleur, ladite conduite (8) étant en relation de communication d'une part avec le vide sanitaire (2) et d'autre part avec l'extérieur pour alimenter le vide sanitaire en air extérieur,
- au moins un échangeur de chaleur air/air (9) installé dans le local technique (1), le dit échangeur comportant deux voies de passage d'air (90, 91) séparées de manière étanche l'une de l'autre par une paroi (92) d'échange de chaleur, la première voie (90) par son orifice d'entrée et son orifice de sortie étant en relation de communication avec le volume interne du vide sanitaire (2) et comportant un ventilateur (900) pour forcer une circulation d'air le long de la paroi d'échange (92), et la seconde voie (91) par son orifice d'entrée étant relation de communication avec l'extérieur par l'intermédiaire d'une seconde conduite d'admission (10) et par son orifice de sortie avec une ventilation mécanique contrôlée (5) du type double flux, intégrant un échangeur thermique, installée dans le local technique (1), ladite seconde voie (91) comportant un ventilateur (910) pour aspirer l'air extérieur et le refouler vers la ventilation mécanique contrôlée (5) en forçant sa circulation le long de la paroi d'échange (92),
- une ventilation mécanique contrôlée double flux (5) avec échangeur thermique ou pompe à chaleur, comportant deux voies de passage d'air (50, 51) associées à l'échangeur thermique ou à la pompe à chaleur, la première voie (50) de la ventilation mécanique contrôlée étant en relation de communication par son orifice d'entrée avec la sortie de la seconde voie (91) de l'échangeur de chaleur (9), et par son orifice de sortie, par l'intermédiaire de gaine de distribution (500), avec des bouches (501) de distribution d'air dans les pièces de l'habitation, et la seconde voie (51) de la ventilation mécanique contrôlée étant en relation de communication par son orifice d'entrée, par l'intermédiaire de gaine de reprise (510) avec des grilles (502) de reprise d'air installées dans les pièces de l'habitation et par son orifice de sortie en relation de communication avec une conduite d'évacuation (6), elle même en relation de communication avec un premier bipasse (7) apte à diriger l'air de reprise soit vers le vide sanitaire (2) soit vers l'extérieur.

2. Maison d'habitation, selon la revendication 1, **caractérisée en ce que** le système de climatisation comporte une unité de contrôle et de commande (100) par laquelle une température de consigne peut être assignée, que le vide sanitaire comporte une sonde de température connectée à l'unité de contrôle et de commande (100) et que le bipasse (7) à volet motorisé intègre une sonde de température connectée électriquement à l'unité de contrôle et de commande (100), que le moteur d'actionnement du bipasse est commandé par l'unité de contrôle et de commande (100) et qu'en fonction de la température mesurée par la sonde du bipasse, de la température de consigne, de la température du vide sanitaire et de la température externe, le premier bipasse (7), sous la commande de l'unité de contrôle (100) commute cette conduite d'évacuation soit vers l'extérieur de la maison soit vers le vide sanitaire (2).

3. Maison d'habitation selon la revendication la revendication 2, **caractérisée par** un second bipasse (11) à volet motorisé disposé immédiatement en aval de l'orifice de sortie de la première voie (90) de l'échangeur de chaleur (9), ledit bipasse (11) comportant une sonde thermique connectée électriquement à l'unité de contrôle et de commande, le moteur du volet de ce second bipasse étant connecté à ladite unité (100) et qu'en fonction de la température relevée par la sonde de ce second bipasse, de la température de consigne, de la température du vide sanitaire et de la température externe, ledit second bipasse, sous la commande de l'unité centrale (100), commute la sortie de la première voie de l'échangeur de chaleur soit vers le vide sanitaire (2) soit vers la conduite d'évacuation (6).

4. Maison d'habitation selon la revendication précédente, **caractérisée par** un clapet antiretour (12) installé immédiatement en aval du second bipasse (11) pour interdire tout retour d'air depuis la conduite d'évacuation (6) vers ce dernier.

5. Maison d'habitation selon l'une quelconque des revendications précédentes, **caractérisée par** des éléments de filtration installés d'une part immédiatement en amont de la première voie (50) de la ventilation mécanique contrôlée (5) et immédiatement en aval de la seconde voie (91) de l'échangeur de chaleur.

6. Maison d'habitation selon l'une quelconque des revendications précédentes, **caractérisée en ce que** la première conduite d'admission (8) est enterrée à une profondeur comprise entre 60 cm et 1,20 m et longe l'un au moins un des côtés de ladite habitation.

7. Maison d'habitation selon l'une quelconque des revendications précédentes, **caractérisée en ce que** la conduite d'admission d'air comporte à l'extérieur une prise d'air (80) installée au-dessus et à distance du sol.

8. Maison d'habitation selon la revendication précédente, **caractérisée en ce que** la prise d'air (80) est associée une vanne (81) apte à autoriser ou interdire toute introduction d'air dans le vide sanitaire.

9. Maison d'habitation selon l'une quelconque des revendications précédentes, **caractérisée par** deux conduites d'admission (8) disposées de manière opposée l'une par rapport à l'autre longeant chacune au moins deux côtés adjacents de ladite maison, les dites conduites pénétrant dans le vide sanitaire (2) par deux points opposés.

10. Maison d'habitation selon l'une quelconque des revendications précédentes, **caractérisée en ce que** le local technique (1) et le volume interne de la maison sont isolés du vide sanitaire.

11. Maison d'habitation selon l'une quelconque des revendications précédentes, **caractérisée en ce que** la conduite d'évacuation (6) est logée en partie dans le local technique (1).

12. Maison d'habitation selon l'une quelconque des revendications précédentes, **caractérisée en ce que** le local technique (1) est isolé phoniquement et thermiquement.

13. Maison d'habitation selon l'une quelconque des revendications précédentes, **caractérisée en ce que** les orifices d'entrée et de sortie de la voie de passage (90) de l'échangeur de chaleur (9) débouchent tous deux dans une chambre semi étanche (14) formée dans le vide sanitaire (2) et s'étendant selon toute la hauteur de ce dernier.

14. Maison d'habitation selon l'une quelconque des revendications précédentes, **caractérisée en ce que** la ventilation mécanique contrôlée (5) intègre une pompe à chaleur et que le condenseur (520) de cette pompe à chaleur est en relation thermique avec un ballon (522) de stockage d'eau chaude sanitaire afin que soit établi un échange thermique entre ce condenseur et l'eau contenue dans le ballon, que ce condenseur 520 est en relation d'échange thermique avec le flux d'air véhiculé par les gaines (500), et que l'évaporateur (521) de cette pompe à chaleur est en relation thermique avec la conduite (6) d'évacuation d'air afin que soit établi un échange thermique entre l'air véhiculé dans cette conduite et l'évaporateur.

15. Maison d'habitation selon la revendication précédente, **caractérisée en ce que** le ballon (522) de stockage d'eau chaude est installé dans le local technique.

## Claims

1. Residential house including a passive air conditioning system, a crawl space (2) and a machine room (1) inside or outside the volume of the house, such as a storeroom (1) or cupboard or other, **characterised in that** the air conditioning system includes:
- at least a first buried air inlet pipe (8) acting as a heat exchanger, said pipe (8) communicating on the one hand with the crawl space (2), and on the other hand with the outside to supply outside air to the crawl space,
- at least one air/air heat exchanger (9) installed in the machine room (1), said exchanger including two air flow paths (90, 91) sealed off from each other by a heat transfer wall (92), with the first path (90), through its inlet and outlet, communicating with the inner volume of the crawl space (2) and including a fan (900) to force air to circulate along the transfer wall (92), and with the second path (91), through its inlet, communicating with the outside via a second inlet pipe (10), and through its outlet, with a controlled mechanical ventilation (5) of the double-flow type, including a heat exchanger, installed in the machine room (1), said second path (91) including a fan (910) to suck in the outside air and reverse its flow towards the controlled mechanical ventilation (5) by forcing it to circulate along the transfer wall (92),
- a double-flow controlled mechanical ventilation (5) with heat exchanger or heat pump, including two air flow paths (50, 51) associated with the heat exchanger or heat pump, with the first path (50) of the controlled mechanical ventilation communicating through its inlet with the output of the second path (91) of the heat exchanger (9), and through its outlet, via a supply duct (500), with air distribution ports (501) in the rooms of the house, and with the second path (51) of the controlled mechanical ventilation communicating through its inlet, via a return duct (510) with air return grids (502) installed in the rooms of the house, and communicating through its outlet with an exhaust pipe (6), itself communicating with a first bypass (7) able to direct the return air either to the crawl space (2) or to the outside.

2. Residential house according to claim 1, **characterised in that** the air conditioning system includes a control unit (100) through which a temperature setting may be assigned, the crawl space includes a temperature sensor connected to the control unit (100), and the bypass (7) with motorised flaps includes a temperature sensor electrically connected to the control unit (100), the motor driving the bypass is controlled by the control unit (100), and **in that** according to the temperature measured by the bypass sensor, the temperature setting, the temperature of the crawl space and the outside temperature, the first bypass (7), controlled by the control unit (100) switches this exhaust pipe either towards the outside of the house or towards the crawl space (2).

3. Residential house according to claim 2, **characterised by** a second bypass (11) with motorised flaps positioned immediately downstream from the outlet of the first path (90) of the heat exchanger (9), said bypass (11) including a temperature sensor electrically connected to the control unit, the flap motor of this second bypass being connected to said unit (100) and in that according to the temperature measured by the sensor of this second bypass, the temperature setting, the temperature of the crawl space and the outside temperature, said second bypass, under the control of the central unit (100), switches the output of the first path of the heat exchanger either towards the crawl space (2) or towards the exhaust pipe (6).

4. Residential house according to the claim above, **characterised by** a check valve (12) installed immediately downstream from the second bypass (11) to prevent any return of air from the exhaust pipe (6) to the second bypass.

5. Residential house according to any of the claims above, **characterised by** filter components installed immediately upstream from the first path (50) of the controlled mechanical ventilation (5) and immediately downstream from the second path (91) of the heat exchanger.

6. Residential house according to any of the claims above, **characterised in that** the first inlet pipe (8) is buried to a depth between 60 cm and 1.20 m, and runs along at least one side of said house.

7. Residential house according to any of the claims above, **characterised in that** the air inlet pipe includes an outside air intake (80) installed above and at a certain distance from the ground.

8. Residential house according to the claim above, **characterised in that** the air intake (80) is associated with a valve (81) able to allow or prevent any introduction of air into the crawl space.

9. Residential house according to any of the claims above, **characterised by** two inlet pipes (8) positioned opposite each other, each running along at least two adjacent sides of said house, said pipes entering the crawl space (2) from two opposite points.

10. Residential house according to any of the claims above, **characterised in that** the machine room (1) and the inner volume of the house are insulated from the crawl space.

11. Residential house according to any of the claims above, **characterised in that** the exhaust pipe (6) is partly housed in the machine room (1).

12. Residential house according to any of the claims above, **characterised in that** the machine room (1) is soundproof and thermally insulated.

13. Residential house according to any of the claims above, **characterised in that** the inlets and outlets of the heat exchanger (9) flow path (90) both lead to a semi-sealed chamber (14) formed inside the crawl space (2) and extending over its full height.

14. Residential house according to any of the claims above, **characterised in that** the controlled mechanical ventilation (5) includes a heat pump, and that the condenser (520) of this heat pump has a thermal connection with a tank (522) for storage of domestic hot water, so that a heat exchange is established between this condenser and the water contained in this tank, that this condenser (520) has a thermal connection with the flow of air conveyed by the ducts (500), and that the evaporator (521) of this heat pump has a thermal connection with the air exhaust pipe (6) so that a heat exchange is established between the air conveyed in this pipe and the evaporator.

15. Residential house according to the claim above, **characterised in that** the hot water storage tank (522) is installed in the machine room.

## Patentansprüche

1. Wohnhaus, das ein passives Klimatisierungssystem, ein Sockelgeschoss (2) und einen Betriebsraum (1) wie etwa einen Kellerraum (1) oder einen begehbaren Schrank oder sonstiges aufweist, welcher sich innerhalb oder außerhalb des Wohnbereichs befinden kann, **dadurch gekennzeichnet, dass** das Klimatisierungssystem Folgendes aufweist:
- mindestens eine erste Luftzuführungsleitung (8), die sich im Erdreich befindet und einen Wärmetauscher bildet, wobei die Leitung (8) einerseits mit dem Sockelgeschoss (2) und andererseits dem Außenbereich in Verbindung steht, um dem Sockelgeschoss Außenluft zuzuführen,
- mindestens einen Luft/Luft-Wärmetauscher (9), der in dem Betriebsraum (1) installiert ist, wobei der Tauscher zwei Luftströmungswege (90, 91) aufweist, die durch eine Wärmeaustauschwand (92) luftdicht voneinander getrennt sind, wobei der erste Weg (90) über seine Eintrittsöffnung und seine Austrittsöffnung mit dem Innenraum des Sockelgeschosses (2) in Verbindung steht und ein Gebläse (900) aufweist, um eine Luftströmung entlang der Austauschwand (92) zu bewirken, und wobei der zweite Weg (91) über seine Eintrittsöffnung sowie mittels einer zweiten Zuführungsleitung (10) mit dem Außenbereich in Verbindung steht und über seine Austrittsöffnung mit einer mechanisch gesteuerten Lüftung (5) nach dem Doppelstromprinzip mit eingebautem Wärmetauscher in Verbindung steht, welche in dem Betriebsraum (1) installiert ist, wobei der zweite Weg (91) ein Gebläse (910) aufweist, um Außenluft anzusaugen und in Richtung der mechanisch gesteuerten Lüftung (5) zu befördern, wobei es bewirkt, dass diese entlang der Austauschwand (92) strömt,
- eine mechanisch gesteuerte Doppelstromlüftung (5) mit Wärmetauscher oder Wärmepumpe, welche zwei Luftströmungswege (50, 51) aufweist, die mit dem Wärmetauscher oder der Wärmepumpe verbunden sind, wobei der erste Weg (50) der mechanisch gesteuerten Lüftung über seine Eintrittsöffnung mit dem Austrittsbereich des zweiten Weges (91) des Wärmetauschers (9) in Verbindung steht und über seine Austrittsöffnung, mittels eines Verteilerrohrs (500), mit Mündungen (501) zur Abgabe von Luft an die Wohnräume, und wobei der zweite Weg (51) der mechanisch gesteuerten Lüftung über seine Eintrittsöffnung, mittels eines Wiedereintrittsrohrs (510), mit Gittern (502) zum Wiedereintritt von Luft, die in den Wohnräumen angebracht sind, in Verbindung steht und über seine Austrittsöffnung mit einer Abführungsleitung (6) in Verbindung steht, die ihrerseits wiederum mit einem ersten Zweiwegeventil (7) in Verbindung steht, das dazu befähigt ist, die wieder eingetretene Luft entweder dem Sockelgeschoss (2) oder dem Außenbereich zuzuführen.

2. Wohnhaus nach Anspruch 1, **dadurch gekennzeichnet, dass** das Klimatisierungssystem eine Überwachungs- und Steuereinheit (100) umfasst, über welche ein Temperatur-Sollwert eingegeben werden kann, dass das Sockelgeschoss einen Temperaturfühler aufweist, der an die Überwachungs- und Steuereinheit (100) angeschlossen ist, und dass in das Zweiwegeventil (7) mit motorbetriebenem Schieber ein Temperaturfühler eingebaut ist, der elektrisch an die Überwachungs- und Steuereinheit (100) angeschlossen ist, dass der Stellmotor des Zweiwegeventils von der Überwachungs-und Steuereinheit (100) gesteuert wird und dass das erste Zweiwegeventil (7), welches der Steuerung durch die Überwachungseinheit (100) unterliegt, die Abführungsleitung in Abhängigkeit von der Temperatur, die vom Fühler des Zweiwegeventil gemessen wird, vom Temperatur-Sollwert, von der Temperatur des Sockelgeschosses und von der Außentemperatur entweder in Richtung des Außenbereichs des Hauses oder in Richtung des Sockelgeschosses (2) umstellt.

3. Wohnhaus nach Anspruch 2, **gekennzeichnet durch** ein zweites Zweiwegeventil (11) mit motorbetriebenem Schieber, welches unmittelbar stromabwärts der Austrittsöffnung des ersten Weges (90) des Wärmetauschers (9) angeordnet ist, wobei das Zweiwegeventil (11) einen Wärmefühler aufweist, der elektrisch an die Überwachungs-und Steuereinheit angeschlossen ist, wobei der Motor des Schiebers dieses zweiten Zweiwegeventils an die Einheit (100) angeschlossen ist, und dass dieses zweite Zweiwegeventil, welches der Steuerung **durch** die Zentraleinheit (100) unterliegt, den Austrittsbereich des ersten Weges des Wärmetauschers in Abhängigkeit von der Temperatur, die vom Fühler dieses zweiten Zweiwegeventil gemessen wird, vom Temperatur-Sollwert, von der Temperatur des Sockelgeschosses und von der Außentemperatur entweder in Richtung des Sockelgeschosses (2) oder in Richtung der Abführungsleitung (6) umstellt.

4. Wohnhaus nach dem vorhergehenden Anspruch, **gekennzeichnet durch** ein Rückschlagventil (12), das unmittelbar stromabwärts des zweiten Zweiwegeventils (11) angebracht ist, um jedwedes Zurückströmen von Luft aus der Abführungsleitung (6) in Richtung des letzteren zu verhindern.

5. Wohnhaus nach einem beliebigen der vorhergehenden Ansprüche, **gekennzeichnet durch** Filterelemente, die zum einen unmittelbar stromaufwärts des ersten Weges (50) der mechanisch gesteuerten Lüftung (5) sowie unmittelbar stromabwärts des zweiten Weges (91) des Wärmetauschers angebracht sind.

6. Wohnhaus nach einem beliebigen der vorhergehenden Ansprüche, **dadurch gekennzeichnet, dass** die erste Zuführungsleitung (8) sich im Erdreich in einer Tiefe im Bereich von 60 cm bis 1,20 m befindet und entlang mindestens einer der Seiten der Wohneinheit verläuft.

7. Wohnhaus nach einem beliebigen der vorhergehenden Ansprüche, **dadurch gekennzeichnet, dass** die Luftzuführungsleitung im Außenbereich einen Lufteinlass (80) aufweist, der oberhalb des Bodens und von diesem beabstandet angebracht ist.

8. Wohnhaus nach dem vorhergehenden Anspruch, **dadurch gekennzeichnet, dass** der Lufteinlass (80) mit einem Ventil (81) verbunden ist, das dazu befähigt ist, ein Einströmen von Luft in das Sockelgeschoss zuzulassen oder zu vollständig verhindern.

9. Wohnhaus nach einem beliebigen der vorhergehenden Ansprüche, **gekennzeichnet durch** zwei Zuführungsleitungen (8), die einander gegenüberliegend angeordnet sind, wobei jede davon entlang mindestens zweier aneinandergrenzender Seiten des Hauses verläuft, wobei die Leitungen an zwei gegenüberliegenden Stellen in das Sockelgeschoss (2) eindringen.

10. Wohnhaus nach einem beliebigen der vorhergehenden Ansprüche, **dadurch gekennzeichnet, dass** der Betriebsraum (1) und der Innenraum des Hauses vom Sockelgeschoss isoliert sind.

11. Wohnhaus nach einem beliebigen der vorhergehenden Ansprüche, **dadurch gekennzeichnet, dass** die Abführungsleitung (6) abschnittsweise im Betriebsraum (1) verläuft.

12. Wohnhaus nach einem beliebigen der vorhergehenden Ansprüche, **dadurch gekennzeichnet, dass** der Betriebsraum (1) schall- und wärmeisoliert ist.

13. Wohnhaus nach einem beliebigen der vorhergehenden Ansprüche, **dadurch gekennzeichnet, dass** die Eintritts- und Austrittsöffnungen der Strömungswege (90) des Wärmetauschers (9) beide in eine halbdichte Kammer (14) einmünden, die in dem Sockelgeschoss (2) gebildet ist und sich über die gesamte Höhe des letzteren erstreckt.

14. Wohnhaus nach einem beliebigen der vorhergehenden Ansprüche, **dadurch gekennzeichnet, dass** eine Wärmepumpe in die mechanisch gesteuerte Lüftung (5) eingebaut ist, und dass der Verflüssiger (520) dieser Wärmepumpe thermisch mit einem Behälter (522) zur Speicherung von Warmwasser für den Haushaltsgebrauch in Verbindung steht, damit es zu einem Wärmeaustausch zwischen diesem Verflüssiger und dem im Behälter enthaltenen Wasser kommt, dass der Verflüssiger (520) im Sinne eines Wärmeaustausches mit dem Luftstrom in Verbindung steht, der von den Rohren (500) befördert wird; und dass der Verdampfer (521) dieser Wärmepumpe thermisch mit der Luftabführungsleitung (6) in Verbindung steht, damit es zu einem Wärmeaustausch zwischen der Luft, die in dieser Leitung befördert wird, und dem Verdampfer kommt.

15. Wohnhaus nach dem vorhergehenden Anspruch, **dadurch gekennzeichnet, dass** der Behälter (522) zur Speicherung warmen Wassers in dem Betriebsraum angebracht ist.
